# EUROPÄISCHE PATENTSCHRIFT

(11) **EP 3 459 338 B1**
(45) Veröffentlichungstag und Bekanntmachung des Hinweises auf die Patenterteilung: **16.09.2020**
(21) Anmeldenummer: 18185694.9
(22) Anmeldetag: 26.07.2018
(51) Int. Cl.: A01D 41/127

(54) **ARBEITSMASCHINE**
WORK MACHINE
MACHINE DE TRAVAIL

(30) Priorität: 26.09.2017 DE 10201712200.
(43) Veröffentlichungstag der Anmeldung: 27.03.2019
(73) Patentinhaber: CLAAS Selbstfahrende Erntemaschinen GmbH, 33428 Harsewinkel (DE)
(72) Erfinder: Dieckmeyer, Sascha, 49326 Melle (DE); Berger, Arthur, 49143 Bissendorf (DE); Escher, Matthias, 49134 Wallenhorst-Rulle (DE); Baumgarten, Joachim, 48361 Beelen (DE); Neu, Sebastian, 49196 Bad Laer (DE)
(74) Vertreter: CLAAS Gruppe

(56) Entgegenhaltungen:
- EP-A1- 3 178 307
- EP-A2- 2 687 923
- EP-A2- 2 687 924
- US-A1- 2016 088 794

## Beschreibung

Die Erfindung betrifft eine Arbeitsmaschine, insbesondere landwirtschaftliche Arbeitsmaschine, Forstmaschine oder Baumaschine, mit den Merkmalen des Oberbegriffs von Anspruch 1 sowie ein Verfahren für die Ansteuerung einer Arbeitsmaschine, insbesondere landwirtschaftlichen Arbeitsmaschine, Forstmaschine oder Baumaschine, mit den Merkmalen des Oberbegriffs von Anspruch 14.

Bei der in Rede stehenden Arbeitsmaschine kann es sich um jedwede Arbeitsmaschine, insbesondere landwirtschaftliche Arbeitsmaschine, Forstmaschine, Baumaschine, Bergbaumaschine oder dergleichen handeln, die der Abarbeitung eines Arbeitsauftrags, insbesondere landwirtschaftlichen Arbeitsauftrags, Forstauftrags, Bauauftrags oder Bergbauauftrags, dient und die mit mehreren Arbeitsorganen sowie mit einem Fahrerassistenzsystem zur Ansteuerung der Arbeitsorgane ausgestattet ist. Dazu gehören beispielsweise Zugmaschinen, insbesondere Traktoren, selbstfahrende Erntemaschinen, insbesondere Mähdrescher oder Feldhäcksler, oder dergleichen. Vorliegend steht die als Mähdrescher ausgestaltete Arbeitsmaschine im Vordergrund.

Eine als Mähdrescher ausgestaltete Arbeitsmaschine dient der Mahd und dem Drusch von Körnerfrüchten. Dabei erfolgt der Drusch durch ein Dreschwerk, welches aus dem von dem Mähdrescher durch das Schneidwerk aufgenommenen Erntegut Korngut gewinnt, das nach dem Dreschen, einer Abscheidung und einer anschließenden Reinigung einem Korntank zugeführt wird. Als weitere Bestandteile des Ernteguts bleiben weiter zum Beispiel die Spreu und das Stroh übrig, welche entweder über das Feld verteilt oder - im Falle des Strohs - auf Schwad zum Beispiel zur späteren Aufnahme durch eine Ballenpresse gelegt werden können. Hier und nachfolgend ist unter dem Begriff "Erntegut" der gesamte vom Dreschwerk aufgenommene Gutstrom zu verstehen, also einschließlich derjenigen Körner, welche noch nicht als Korngut aus dem Erntegut gewonnen wurden, und den Körnern, welche gegebenenfalls in dem Erntegutstrom als Verlust verbleiben und mit dem Stroh abgelegt werden.

Im Dreschwerk wird das Korn durch eine im Prinzip wälzende Bearbeitung aus dem Stroh gerieben (ausgedroschen) und vom übrigen Erntegutstrom getrennt, so dass es direkt der Reinigung zugeführt werden kann. Der übrig gebliebene Erntegutstrom wird dann dem Abscheidebereich zugeführt, in welchem zum Beispiel durch eine Schüttleranordnung das verbliebene Korn von dem Erntegutstrom getrennt und danach ebenfalls der Reinigung zugeführt wird.

Es gibt nun eine ganze Reihe von Qualitätskriterien, anhand derer die Güte des landwirtschaftlichen Arbeitsprozesses, hier des Ernteprozesses, beurteilt werden kann. Zum einen sollen möglichst alle Körner aus dem Erntegutstrom entfernt und dem Korntank zugeführt werden, und zwar mit möglichst wenig gebrochenen Körnern (Bruchkörnern) und einem geringen Nichtkornanteil im Korngut. Weiterhin soll gegebenenfalls auch das Stroh nicht so stark zerstört und zum Beispiel zerschnitten werden, dass die spätere Verwertung erschwert wird. Schließlich soll auch die für die Bearbeitung eines Feldes benötigte Zeit möglichst kurz und/oder der dabei verbrauchte Kraftstoff möglichst gering gehalten werden. Die genannten Qualitätskriterien sind hier nur beispielhaft genannt, weitere Qualitätskriterien sind ebenfalls denkbar.

Die Erfüllung der obigen Qualitätskriterien setzt voraus, dass das Dreschwerk und die anderen Arbeitsorgane des Mähdreschers auf bestimmte Art und Weise angesteuert werden. Hierfür ist das Fahrerassistenzsystem vorgesehen, das die Ansteuerung der Arbeitsorgane nach mindestens einer bedienerseitig vorgebbaren Abarbeitungsstrategie, die auf die Erfüllung mindestens eines Qualitätskriteriums gerichtet ist, vornimmt. Die prinzipielle Arbeitsweise des Fahrerassistenzsystems ist in der EP 2 322 029 B1 beschrieben. Dieses weist eine graphische Benutzerschnittstelle auf, über die zumindest ein Teil der Abarbeitungsstrategie bedienerseitig vorgebbar ist. Sofern der Bediener miteinander konkurrierende Qualitätskriterien vorgibt, die sich nicht gleichzeitig erfüllen lassen, reagiert das Fahrerassistenzsystem vorzugsweise mit einem entsprechenden Warnhinweis.

Die bekannte Arbeitsmaschine (EP 3 178 307 A1), von der die Erfindung ausgeht, zeigt ein Fahrerassistenzsystem, bei dem die Gewichtung konkurrierender Qualitätskriterien einer Abarbeitungsstrategie, hier einer Erntestrategie, über ein virtuelles Bedienelement in Form eines virtuellen Schiebestellers verändert werden kann. Der Bediener kann hier beispielsweise den Schiebesteller zwischen den konkurrierenden Qualitätskriterien "Minimierung des Arbeitsprozessparameters Bruchkornanteil" und "Maximierung des Arbeitsprozessparameters Ausdrusch" hin- und herbewegen, so dass die Veränderung einer über das virtuelle Bedienelement visualisierten Gewichtungsvariable mit einer gegenläufigen Veränderung der Gewichtung der konkurrierenden Qualitätskriterien einhergeht. Wird der Schiebesteller beispielsweise in Richtung "Minimierung des Arbeitsprozessparameters Bruchkornanteil" bewegt, wird dadurch das Qualitätskriterium "Maximierung des Arbeitsprozessparameters Ausdrusch" untergewichtet. Die graphische Benutzerschnittstelle visualisiert hier verschiedene bedienerseitig vorgebbare Bedienelemente, mit denen eine jeweilige Gewichtungsvariable, die einer Gruppe von miteinander konkurrierenden Qualitätskriterien zugeordnet ist, verändert werden kann. Nachteilig ist die Tatsache, dass abhängig vom jeweiligen landwirtschaftlichen Arbeitsauftrag unter Umständen weitere Optimierungen sinnvoll sind, die auch Veränderungen weiterer Gewichtungsvariablen erfordern würden. Hier muss der Bediener die sinnvollen weiteren Optimierungen erkennen und dann für die Änderung jeder Gewichtungsvariable eine eigene Eingabe durchführen.

Der Erfindung liegt das Problem zugrunde, die bekannte Arbeitsmaschine derart auszugestalten und weiterzubilden, dass weitere Optimierungen nach einer bedienerseitigen Vorgabe einer Abarbeitungsstrategie auf besonders einfache Art und Weise erfolgen können.

Das obige Problem wird bei einer Arbeitsmaschine gemäß dem Oberbegriff von Anspruch 1 durch die Merkmale des kennzeichnenden Teils von Anspruch 1 gelöst.

Wesentlich ist die grundsätzliche Überlegung, dass das Fahrerassistenzsystem, nach dem es eine bedienerseitig vorgenommene Änderung einer Gewichtungsvariable festgestellt hat, eine Vermutung anstellt, welches Ziel der Bediener mit dieser Änderung verfolgen möchte, und schlägt dem Bediener daraufhin eine Änderung mindestens einer weiteren Gewichtungsvariable vor, die die Erreichung des vermuteten Ziels des Bedieners unterstützt. Bevorzugt braucht der Bediener nur eine Gewichtungsvariable, die bestimmten konkurrierenden Qualitätskriterien zugeordnet ist, über das virtuelle Bedienelement verändern und das Fahrerassistenzsystem verändert daraufhin selbsttätig die Gewichtungsvariable anderer konkurrierender Qualitätskriterien, besonders bevorzugt mehrere oder gar alle übrigen Gewichtungsvariablen konkurrierender Qualitätskriterien, die über die graphische Benutzerschnittstelle visualisiert werden.

Im Einzelnen ist vorgesehen, dass das Fahrerassistenzsystem der vorschlagsgemäßen landwirtschaftlichen Arbeitsmaschine das Strategiewahlverhalten des Bedieners registriert, aus dem registrierten Strategiewahlverhalten ein Optimierungsziel prognostiziert und für dieses prognostizierte Optimierungsziel einen Optimierungsvorschlag unterbreitet. Der wesentliche Vorteil ist, dass weitere Optimierungen nach einer bedienerseitigen Vorgabe einer Abarbeitungsstrategie auf besonders einfache Weise erfolgen können, indem das Fahrerassistenzsystem dem Bediener sinnvolle weitere Änderungen vorschlägt, die der Bediener dann beispielsweise lediglich annehmen braucht.

Nach der Ausgestaltung gemäß Anspruch 2 wird das Strategiewahlverhalten des Bedieners anhand einer Änderung der Gewichtungsvariable registriert, die der Bediener vorgenommen hat. Verschiebt der Bediener also beispielsweise ein virtuelles Bedienelement, insbesondere mittels Drag-and-Drop-Bedienung (Anspruch 3), in Richtung einer der konkurrierenden Qualitätskriterien, erkennt das Fahrerassistenzsystem diese Veränderung und prognostiziert daraufhin ein Optimierungsziel, auf dessen Basis schließlich ein Optimierungsvorschlag unterbreitet wird.

Nach der Ausgestaltung gemäß Anspruch 4 wird der systemseitig erzeugte Optimierungsvorschlag dem Bediener graphisch angezeigt. Bevorzugt hat der Bediener die Möglichkeit, den Optimierungsvorschlag anzunehmen, das heißt zu bestätigen, und/oder abzulehnen und/oder anzupassen (Anspruch 5). Entsprechende Eingaben kann der Bediener auf der graphischen Benutzerschnittstelle und/oder über das virtuelle Bedienelement vornehmen (Anspruch 6).

Das Fahrerassistenzsystem nimmt nach der erfindungsgemäßen Ausgestaltung, nachdem der Optimierungsvorschlag angenommen und/oder angepasst wurde, eine Veränderung der Gewichtung der konkurrierenden Qualitätskriterien vor, die dem Optimierungsvorschlag entspricht. Die Veränderung der Gewichtung geht dann in die Abarbeitungsstrategie ein.

Nach der Ausgestaltung gemäß Anspruch 13 trifft das Fahrerassistenzsystem zur Erfüllung der Qualitätskriterien jeweils zugeordnete Steuermaßnahmen. Bei miteinander konkurrierenden Qualitätskriterien werden die Steuermaßnahmen gemäß der Gewichtungsvariable zueinander gewichtet getroffen.

Grundsätzlich können mehrere Gewichtungsvariablen vorgesehen sein, denen jeweils konkurrierende Qualitätskriterien zugeordnet sind. Bei der besonders bevorzugten Ausgestaltung gemäß Anspruch 8 sind die konkurrierenden Qualitätskriterien paarweise jeweils einer Gewichtungsvariablen zugeordnet. Grundsätzlich ist es aber auch denkbar, dass einer Gewichtungsvariablen mehrere Qualitätskriterien, insbesondere drei Qualitätskriterien, zugeordnet sind, die zum Teil miteinander konkurrieren.

Bei der bevorzugten Ausgestaltung gemäß Anspruch 9 weist das virtuelle Bedienelement eine Mittelstellung auf, die einer Gleichgewichtung der konkurrierenden Qualitätskriterien zueinander entspricht. Eine Verstellung aus der Mittelstellung heraus bewirkt dann abhängig von der Verstellrichtung eine entsprechende Veränderung der Gewichtungsvariable. Die Veränderung der Gewichtungsvariable geht dabei mit einer zueinander gegenläufigen Veränderung der Gewichtung der konkurrierenden Qualitätskriterien einher.

Die weiter bevorzugten Ausgestaltungen gemäß den Ansprüchen 10 bis 13 betreffen die Anwendung der vorschlagsgemäßen Lehre auf eine als Mähdrescher ausgestaltete Arbeitsmaschine. Bei einem Mähdrescher ergibt sich eine Mehrzahl von Qualitätskriterien, die miteinander konkurrieren. Ein Beispiel hierfür ist das Qualitätskriterium der Maximierung des Ausdrusches, womit aber gleichzeitig eine Verringerung des Durchsatzes einhergeht, was wiederum zu einem höheren Zeitaufwand und auch zu einem höheren Kraftstoffverbrauch bei der Durchführung des landwirtschaftlichen Arbeitsauftrags führt. Damit handelt es sich bei den Qualitätskriterien der Maximierung des Ausdrusches und der Maximierung des Durchsatzes um zwei konkurrierende Qualitätskriterien im obigen Sinne.

Nach einer weiteren Lehre gemäß Anspruch 14, der eigenständige Bedeutung zukommt, wird ein Verfahren für die Ansteuerung der vorschlagsgemäßen landwirtschaftlichen Arbeitsmaschine als solches beansprucht.

Wesentlich nach dem vorschlagsgemäßen Verfahren ist, dass das Fahrerassistenzsystem das Strategiewahlverhalten des Bedieners registriert, aus dem registrierten Strategiewahlverhalten ein Optimierungsziel prognostiziert und für dieses prognostizierte Optimierungsziel einen Optimierungsvorschlag unterbreitet. Der Optimierungsvorschlag kann dann bedienerseitig angenommen, geändert oder abgelehnt werden. Es ist aber auch denkbar, dass der Optimierungsvorschlag systemseitig automatisch angenommen bzw. eingestellt wird. Zur Erläuterung des vorschlagsgemäßen Verfahrens darf auf alle Ausführungen zu der vorschlagsgemäßen landwirtschaftlichen Arbeitsmaschine verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße Arbeitsmaschine in einer ganz schematischen Darstellung und
- Fig. 2: eine graphische Benutzerschnittstelle des Fahrerassistenzsystems der Arbeitsmaschine gemäß Fig. 1, und zwar in a) vor einer bedienerseitigen Vorgabe einer Abarbeitungsstrategie und in b) nach einer bedienerseitigen Vorgabe einer Abarbeitungsstrategie.

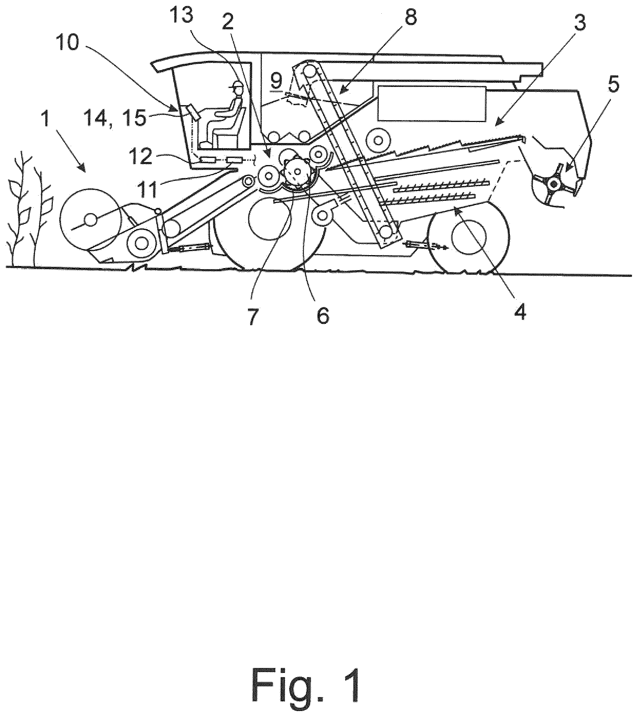

Die in Fig. 1 dargestellte Arbeitsmaschine ist hier beispielhaft als landwirtschaftliche Arbeitsmaschine ausgebildet und dient der Abarbeitung eines Arbeitsprozesses, hier eines landwirtschaftlichen Arbeitsprozesses. Hier und vorzugsweise handelt es sich bei der Arbeitsmaschine um einen Mähdrescher, welcher der Abarbeitung eines Ernteprozesses dient. Die vorschlagsgemäße Lösung ist auf alle anderen, im einleitenden Teil genannten landwirtschaftlichen Arbeitsmaschinen ebenfalls anwendbar. Alle folgenden Ausführungen betreffen zwar durchweg einen Mähdrescher, gelten aber auch für alle anderen Arten von landwirtschaftlichen Arbeitsmaschinen.

Die dargestellte landwirtschaftliche Arbeitsmaschine weist die Arbeitsorgane Schneidwerk 1, Dreschwerk 2, Abscheideanordnung 3, Reinigungsanordnung 4 und Verteilanordnung 5 auf.

Während das Schneidwerk 1 dem Schneiden und der Aufnahme des Ernteguts dient, kommt dem Dreschwerk 2 die Aufgabe des Dreschens des aufgenommenen Ernteguts zu Korngut zu. Unter dem Erntegut ist dabei das gesamte vom Feldbestand aufgenommene und dem Dreschwerk 2 zugeführte Material zu verstehen, wobei das Korngut dann die von dem Mähdrescher aus dem Erntegut zu gewinnenden Körner bezeichnet.

Das Dreschwerk 2 ist mit einer Dreschtrommel 6 ausgestattet, die mit einem Dreschkorb 7 zusammenwirkt. Der dem Dreschwerk 2 zugeführte Erntegutstrom wird im Anschluss, ohne das bereits hier gewonnene Korngut, der Abscheideanordnung 3 zugeführt. Grundsätzlich dient das Dreschwerk 2 zum Ausreiben des überwiegenden Teils des Kornguts aus dem Erntegut durch den Dreschvorgang. In der Abscheideanordnung 3 wird dann das Erntegut mit dem in ihm verbliebenen Kornanteil so bewegt, beispielsweise geschüttelt, dass auch das verbliebene Korngut möglichst aus dem Stroh und dem sonstigen Erntegut herausgetrennt wird. Das im Dreschwerk 2 und der Abscheideanordnung 3 gewonnene Korngut wird dann einer Reinigungsanordnung 4 zugeführt. In der Reinigungsanordnung 4, welche regelmäßig mehrstufig ist, werden dann noch bis hierher im Korngut mitgeführte Nichtkornbestandteile, zum Beispiel Spreu und Strohteile, sowie unausgedroschenes Material, wie etwa Ährenspitzen oder Grannen, von dem Korngut getrennt. Anschließend gelangt das gereinigte Korngut über eine Transportanordnung 8, zum Beispiel einen Kornelevator, in einen Korntank 9. Das ausgedroschene Stroh, also das verbliebene Erntegut in der Abscheideanordnung 3, wird von dem Mähdrescher über die Verteilanordnung 5 abgelegt, zum Beispiel als Schwad entlang der Fahrspur.

Ein obiges Dreschwerk 2 kann durch die Vorgabe verschiedener Maschinenparameter angesteuert werden, worunter in Abhängigkeit vom Aufbau des Dreschwerks 2 Antriebsparameter, wie beispielsweise eine Trommeldrehzahl oder sonstige Bewegungskennzahlen der Dreschtrommel 6 sowie eine Korbweite, also der Abstand zwischen der Dreschtrommel 6 und dem Dreschkorb 7, fallen. Sofern das Dreschwerk 2 Entgrannerklappen aufweist, können auch diese im Rahmen der Ansteuerung des Dreschwerks 2 verstellt werden.

Die vorschlagsgemäße Arbeitsmaschine weist ferner ein Fahrerassistenzsystem 10 zur Ansteuerung der Arbeitsorgane 1 bis 5 auf. Das Fahrerassistenzsystem 10 umfasst einen Speicher 11 zum Hinterlegen von Daten, die mindestens eine Abarbeitungsstrategie kennzeichnen, also einen Speicher 11 im informationstechnischen Sinne, sowie eine Rechenvorrichtung 12 zur Verarbeitung der in dem Speicher 11 hinterlegten Daten. Grundsätzlich ist das Fahrerassistenzsystem 10 dazu eingerichtet, einen Bediener 13 der landwirtschaftlichen Arbeitsmaschine bei der Bedienung derselben zu unterstützen.

Das Fahrerassistenzsystem 10 steuert die hier lediglich beispielhaft genannten Arbeitsorgane 1 bis 5 nach mindestens einer bedienerseitig vorgebbaren Abarbeitungsstrategie. Die Abarbeitungsstrategie ist auf die Erfüllung mindestens eines Qualitätskriteriums gerichtet. Am Beispiel des Mähdreschers handelt es sich bei den Qualitätskriterien vorzugsweise um die Zielvorgabe der Einstellung oder der Optimierung mindestens eines Ernteprozessparameters wie "Bruchkornanteil", "Ausdrusch", "Sauberkeit", "Strohqualität" und "Durchsatz". Der Ernteprozessparameter "Durchsatz" ist hier mit dem Ernteprozessparameter "Kraftstoffverbrauch" zusammengefasst, da eine Erhöhung des Durchsatzes zu einer Erhöhung des absoluten Kraftstoffverbrauchs führt und umgekehrt. Grundsätzlich können auch noch weitere Arbeitsprozessparameter bzw. Ernteprozessparameter vorgesehen sein, beispielsweise "Abscheideverluste", "Schlupf", "Dreschwerkantrieb" etc., um nur einige weitere Beispiele zu nennen.

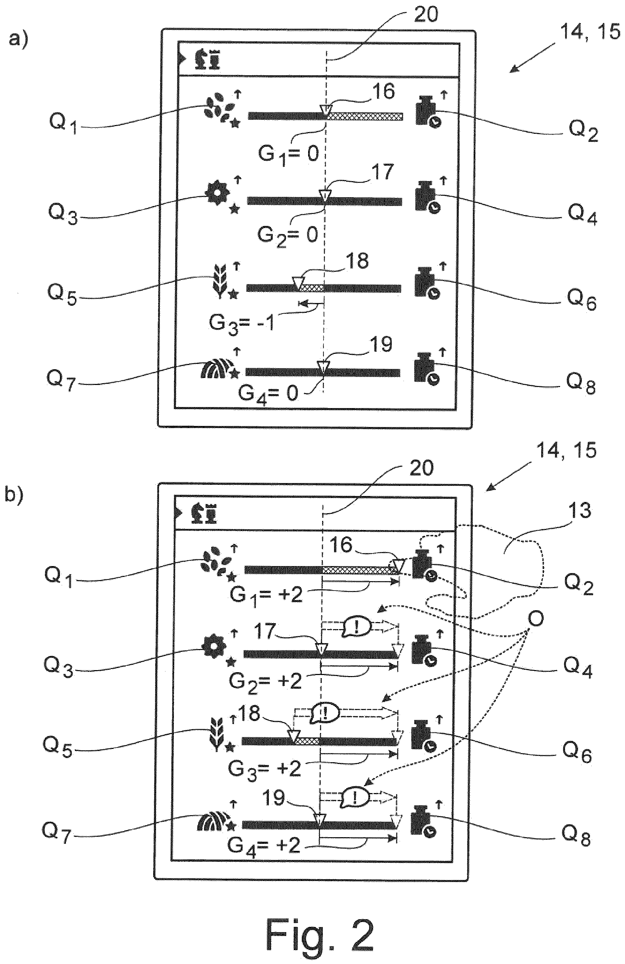

Das Fahrerassistenzsystem 10 ist vorschlagsgemäß mit einer graphischen Benutzerschnittstelle 14 mit einem Display 15 ausgestattet, über die bzw. über das zumindest ein Teil der Abarbeitungsstrategie bedienerseitig vorgebbar ist. In besonders bevorzugter Ausgestaltung handelt es sich bei der graphischen Benutzerschnittstelle 14 um einen Touchscreen-Monitor. Ein solcher ist beispielhaft in Fig. 2a und b dargestellt.

Auf der graphischen Benutzerschnittstelle 14 können jeweils konkurrierende Qualitätskriterien Q₁, Q₂; Q₃, Q₄; Q₅, Q₆, Q₇, Q₈ visualisiert werden, die Bestandteil der bedienerseitig vorgebbaren Abarbeitungsstrategie sind. Der Begriff "konkurrierend" ist im Hinblick auf jeweils zwei Qualitätskriterien so zu verstehen, dass die Erfüllung des einen Qualitätskriteriums Q₁, Q₃, Q₅, Q₇ der Erfüllung jeweils mindestens eines anderen Qualitätskriteriums Q₂, Q₄, Q₆, Q₈ entgegenwirkt und umgekehrt. Eine Ansteuerung der Arbeitsorgane 1 bis 5, die auf die Erfüllung beider Qualitätskriterien Q₁, Q₂; Q₃, Q₄; Q₅, Q₆, Q₇, Q₈ gerichtet ist, lässt sich bei derart konkurrierenden Qualitätskriterien nicht umsetzen. Daher ist jeweils konkurrierenden Qualitätskriterien Q₁, Q₂; Q₃, Q₄; Q₅, Q₆, Q₇, Q₈ eine Gewichtungsvariable G₁, G₂, G₃, G₄ zugeordnet, die eine Gewichtung jeweils konkurrierender Qualitätskriterien Q₁, Q₂; Q₃, Q₄; Q₅, Q₆, Q₇, Q₈ zueinander repräsentiert. Gemäß dieser Gewichtung, also gemäß dieser Gewichtungsvariable G₁, G₂, G₃, G₄, gehen die konkurrierenden Qualitätskriterien Q₁, Q₂; Q₃, Q₄; Q₅, Q₆, Q₇, Q₈ entsprechend zueinander gewichtet in die Abarbeitungsstrategie ein. Das Fahrerassistenzsystem 10 weist demjenigen Qualitätskriterium mit der höheren Gewichtung bei der Ansteuerung der Arbeitsorgane 1 bis 5 eine höhere Priorität zu als einem Qualitätskriterium mit einer geringeren Gewichtung.

Die den konkurrierenden Qualitätskriterien Q₁, Q₂; Q₃, Q₄; Q₅, Q₆, Q₇, Q₈ jeweils zugeordnete Gewichtungsvariable G₁, G₂, G₃, G₄ ist über ein virtuelles Bedienelement 16 bis 19 der graphischen Benutzerschnittstelle 14 visualisiert und deren Wert bedienerseitig vorgebbar. Dies ist in der Darstellung gemäß Fig. 2a gezeigt. Der Fig. 2a lässt sich entnehmen, dass sich die Gewichtungsvariable G₁, G₂, G₃, G₄ durch das dortige, als Schiebesteller ausgestaltete Bedienelement 16 bis 19 visualisieren und verstellen lässt. Dabei ist es hier und vorzugsweise so, dass den Bedienelementen 16 bis 19 eine Mittelstellung 20 zugeordnet ist, die eine ausgeglichene Berücksichtigung der miteinander konkurrierenden Qualitätskriterien Q₁, Q₂; Q₃, Q₄; Q₅, Q₆, Q₇, Q₈ repräsentiert. Eine Auslenkung des jeweiligen Bedienelements 16 bis 19 aus der Mittelstellung 20 heraus entspricht einer entsprechenden Änderung der Gewichtungsvariable G₁, G₂, G₃, G₄. Dabei ist hier und vorzugsweise paarweise konkurrierenden Qualitätskriterien Q₁, Q₂; Q₃, Q₄; Q₅, Q₆, Q₇, Q₈ jeweils paarweise eine Gewichtungsvariable G₁, G₂, G₃, G₄ zugeordnet. Grundsätzlich kann aber auch vorgesehen sein, dass einer beliebigen Gruppe von konkurrierenden Qualitätskriterien, beispielsweise einer Gruppe von jeweils drei Qualitätskriterien, eine gemeinsame Gewichtungsvariable zugeordnet ist, die auf die beschriebene Weise visualisierbar und vorgebbar ist.

Wesentlich bei der vorschlagsgemäßen Lösung ist nun, dass das Fahrerassistenzsystem 10 das Strategiewahlverhalten des Bedieners 13 registriert und aus dem registrierten Strategiewahlverhalten ein Optimierungsziel prognostiziert. Mit anderen Worten stellt das Fahrerassistenzsystem 10 auf Basis einer oder mehrerer bedienerseitig vorgenommenen Änderungen von Gewichtungsvariablen G₁, G₂, G₃, G₄ eine Vermutung an, aus welchem Grund der Bediener 13 die jeweilige Veränderung der Gewichtungsvariable bzw. Gewichtungsvariablen G₁, G₂, G₃, G₄ vorgenommen haben könnte. Diese Vermutung bzw. Prognose des Fahrerassistenzsystems 10 dient diesem dann als Grundlage für die Erzeugung und Unterbreitung eines Optimierungsvorschlags O an den Bediener 13. Der Optimierungsvorschlag O basiert also auf dem von dem Fahrerassistenzsystem 10 angenommenen Optimierungsziel. Das Fahrerassistenzsystem 10 schlägt also dem Bediener 13, nachdem dieser selbst eine oder gegebenenfalls auch mehrere der Gewichtungsvariablen G₁, G₂, G₃, G₄ verändert hat, zusätzliche, in diesem Zusammenhang sinnvolle Änderungen weiterer der Gewichtungsvariablen G₁, G₂, G₃, G₄ vor.

Bei dem in Fig. 2a und b dargestellten Ausführungsbeispiel werden auf der graphischen Benutzerschnittstelle 14 bzw. dem Display 15 beispielhaft vier Paare konkurrierender Qualitätskriterien Q₁, Q₂; Q₃, Q₄; Q₅, Q₆, Q₇, Q₈ und entsprechend jedem Paar zugeordnete Gewichtungsvariablen G₁, G₂, G₃, G₄ visualisiert.

Bei den konkurrierenden Qualitätskriterien Q₁, Q₂ handelt es sich hier um die Minimierung des Arbeitsprozessparameters "Bruchkornanteil" (linke Seite) und die Maximierung des Arbeitsprozessparameters "Durchsatz" (rechte Seite). Bei den konkurrierenden Qualitätskriterien Q₃, Q₄ handelt es sich hier um die Maximierung des Arbeitsprozessparameters "Ausdrusch" (linke Seite) und die Maximierung des Arbeitsprozessparameters "Durchsatz" (rechte Seite). Bei den konkurrierenden Qualitätskriterien Q₅, Q₆ handelt es sich um die Maximierung des Arbeitsprozessparameters "Sauberkeit" (linke Seite) und die Maximierung des Arbeitsprozessparameters "Durchsatz" (rechte Seite). Schließlich handelt es sich bei den konkurrierenden Qualitätskriterien Q₇, Q₈ um die Maximierung des Arbeitsprozessparameters "Strohqualität" (linke Seite) und die Maximierung des Arbeitsprozessparameters "Durchsatz" (rechte Seite).

Dem Paar konkurrierender Qualitätskriterien Q₁, Q₂ ist hier das Bedienelement 16 zugeordnet, das in Fig. 2a in der Mittelstellung 20 angeordnet ist, so dass die Gewichtungsvariable G₁ hier null ist. Es besteht hier also eine Gleichgewichtung zwischen den Arbeitsprozessparametern "Bruchkornanteil" und "Durchsatz". Dem Paar konkurrierender Qualitätskriterien Q₃, Q₄ ist das Bedienelement 17 zugeordnet, das in Fig. 2a ebenfalls in der Mittelstellung 20 angeordnet ist, so dass die Gewichtungsvariable G₂ ebenfalls null ist. Hier besteht damit eine Gleichgewichtung zwischen den Arbeitsprozessparametern "Ausdrusch" und "Durchsatz". Dem Paar konkurrierender Qualitätskriterien Q₅, Q₆ ist hier das Bedienelement 18 zugeordnet, das in Fig. 2a aus der Mittelstellung 20 heraus zum Arbeitsprozessparameter "Sauberkeit" hin verlagert ist, so dass die Gewichtungsvariable G₃ hier beispielsweise einen Wert von -1 hat. Dies bedeutet, dass der Arbeitsprozessparameter "Sauberkeit" gegenüber dem Arbeitsprozessparameter "Durchsatz" hier übergewichtet ist. Die Reinigungsqualität des Korns wird hier und vorzugsweise also in der Reinigungsanordnung 4 erhöht, womit eine Verringerung des Durchsatzes einhergeht. Dem Paar konkurrierender Qualitätskriterien Q₇, Q₈ ist schließlich das Bedienelement 19 zugeordnet, das in Fig. 2a ebenfalls in der Mittelstellung 20 angeordnet ist, so dass die Gewichtungsvariable G₄ hier auch null ist. Der Arbeitsprozessparameter "Strohqualität" ist damit gegenüber dem Arbeitsprozessparameter "Durchsatz" auch gleichgewichtet.

Fig. 2a zeigt einen Zustand, bevor der Bediener 13 eine neue Abarbeitungsstrategie bedienerseitig vorgibt und damit die bisherige Abarbeitungsstrategie ändert. In Fig. 2b ist der Zustand dargestellt, nachdem der Bediener 13, hier symbolisiert durch eine gestrichelte Hand, die neue Abarbeitungsstrategie vorgegeben hat. Hier und vorzugsweise hat der Bediener 13 eine Abarbeitungsstrategie gewählt, die auf eine Maximierung des Durchsatzes gerichtet ist.

Im Einzelnen hat der Bediener 13 dazu das Bedienelement 16 aus der Mittelstellung 20 maximal nach rechts zum Arbeitsprozessparameter "Durchsatz" hin verstellt. Die entsprechende Gewichtungsvariable G₂ hat nach der Verstellung hier beispielsweise einen Wert von +2, der hier einen Maximalwert darstellt. Der Arbeitsprozessparameter "Durchsatz" wird damit gegenüber dem Arbeitsprozessparameter "Bruchkornanteil" maximal möglich übergewichtet. Das Fahrerassistenzsystem 10 registriert das Strategiewahlverhalten des Bedieners 13, erkennt also die Auswahl der neuen Abarbeitungsstrategie, wonach der Arbeitsprozessparameter "Durchsatz" gegenüber dem Arbeitsprozessparameter "Bruchkornanteil" maximal übergewichtet sein soll, und nimmt daraufhin an, dass der Bediener 13 bei der Durchführung des landwirtschaftlichen Arbeitsauftrags Wert auf einen möglichst hohen Durchsatz legt. Aus dem registrierten Strategiewahlverhalten prognostiziert das Fahrerassistenzsystem 10 somit als ein Optimierungsziel die Maximierung des Arbeitsprozessparameters "Durchsatz".

Für dieses prognostizierte Optimierungsziel unterbreitet das Fahrerassistenzsystem 10 dann in der Folge einen Optimierungsvorschlag O, der hier und vorzugsweise darin besteht, auch die Gewichtungsvariablen G₂, G₃, G₄ der übrigen Paare konkurrierender Qualitätskriterien Q₃, Q₄; Q₅, Q₆, Q₇, Q₈ maximal zum Arbeitsprozessparameter "Durchsatz" hin zu verstellen. Das Fahrerassistenzsystem 10 schlägt also vor, den Arbeitsprozessparameter "Durchsatz" auch gegenüber den anderen jeweils dazu konkurrierenden Qualitätskriterien Q₃, Q₅, Q₇ überzugewichten.

Der systemseitige Optimierungsvorschlag O wird hier und vorzugsweise auf der graphischen Benutzerschnittstelle 14 visualisiert. Die Visualisierung erfolgt hier über das jeweilige virtuelle Bedienelement 17 bis 19, nämlich in der Form, dass eine Verschiebung des jeweiligen virtuellen Bedienelements 17 bis 19 aus seiner Ausgangsstellung heraus in eine systemseitig vorgeschlagene Stellung, hier beispielsweise die den maximalen Durchsatz repräsentierende Stellung, symbolisiert wird. Dies wird zum Beispiel dadurch symbolisiert, dass das jeweilige virtuelle Bedienelement 17 bis 19, das sich nach wie vor in der Ausgangsstellung befindet, zusätzlich auch noch einmal in der systemseitig vorgeschlagenen Stellung dargestellt wird. Die Darstellung in der systemseitig vorgeschlagenen Stellung kann dabei von der Darstellung in der tatsächlichen Ausgangsstellung abweichen, beispielsweise indem das jeweilige Bedienelement 17 bis 19 in der systemseitig vorgeschlagenen Stellung eine andere Farbe und/oder einen anderen Kontrast und/oder eine andere Kontur, hier beispielsweise eine gestrichelte Kontur, aufweist.

Der Bediener 13 kann nun den Optimierungsvorschlag O, der systemseitig auf der graphischen Benutzerschnittstelle 14 visualisiert ist, teilweise oder vollständig annehmen, was hier und vorzugsweise über eine bedienerseitige Eingabe erfolgen kann. Die bedienerseitige Eingabe ist insbesondere eine Eingabe auf der graphischen Benutzerschnittstelle 14, beispielsweise durch Antippen des in der systemseitig vorgeschlagenen Stellung dargestellten virtuellen Bedienelements 17 bis 19. Es ist auch denkbar, eine bedienerseitige Eingabe über das jeweilige virtuelle Bedienelement 17 bis 19 in der Weise vorzusehen, dass der Bediener 13 das jeweilige virtuelle Bedienelement 17 bis 19 aus der Ausgangsstellung in die vorgeschlagene Stellung verschiebt. Eine entsprechende Eingabe stellt dann eine Annahme bzw. eine Bestätigung des systemseitigen Optimierungsvorschlags O dar. Es ist auch denkbar, dass der Bediener 13 den Optimierungsvorschlag O ablehnen kann, was ebenfalls durch eine bedienerseitige Eingabe erfolgen könnte. Grundsätzlich könnte auch vorgesehen sein, dass der Optimierungsvorschlag O nur für einen bestimmten Zeitraum angezeigt wird und nach Verstreichen einer entsprechenden Zeitspanne automatisch wieder entfernt wird, so dass der Bediener anstelle einer aktiven Ablehnung eines Optimierungsvorschlags O zusätzlich oder alternativ auch die Möglichkeit hat, die vorgegebene Zeitspanne bis zum Entfernen des Optimierungsvorschlags O abzuwarten.

Es ist auch denkbar, dass der Optimierungsvorschlag O bedienerseitig angepasst werden kann, was ebenfalls über eine bedienerseitige Eingabe auf der graphischen Benutzerschnittstelle 14 und/oder über das jeweilige virtuelle Bedienelement 17 bis 19 erfolgen kann, beispielsweise durch Verschieben des jeweiligen virtuellen Bedienelements 17 bis 19 in eine andere als vom Fahrerassistenzsystem 10 vorgeschlagene Stellung.

Bei dem in Fig. 2b dargestellten Ausführungsbeispiel ist zusammengefasst vorgesehen, dass zwei konkurrierende Qualitätskriterien Q₁, Q₂ die Minimierung des Arbeitsprozessparameters "Bruchkornanteil" und die Maximierung des Arbeitsprozessparameters "Durchsatz" sind, wobei basierend auf einer bedienerseitig vorgenommenen Änderung der Gewichtungsvariable G₁, die diesen konkurrierenden Qualitätskriterien Q₁, Q₂ zugeordnet ist, als Optimierungsvorschlag O eine Veränderung der Gewichtung der konkurrierenden Qualitätskriterien Q₃, Q₄ "Maximierung des Arbeitsprozessparameters Ausdrusch" und "Maximierung des Arbeitsprozessparameters Durchsatz" und/oder der Gewichtung der konkurrierenden Qualitätskriterien Q₅, Q₆ "Maximierung des Arbeitsprozessparameters Sauberkeit" und "Maximierung des Arbeitsprozessparameters Durchsatz" und/oder der Gewichtung der konkurrierenden Qualitätskriterien Q₇, Q₈ "Maximierung des Arbeitsprozessparameters Strohqualität" und "Maximierung des Arbeitsprozessparameters Durchsatz" vorgeschlagen und visualisiert wird.

Das Fahrerassistenzsystem 10 erlaubt hier und vorzugsweise auch die Prognose eines Optimierungsziels und das Unterbreiten eines entsprechenden Optimierungsvorschlags O, wenn der Bediener 13 eine andere als die zuvor beispielhaft beschriebene Veränderung bzw. Auswahl einer Abarbeitungsstrategie vornimmt, beispielsweise, wenn der Bediener 13 die Gewichtungsvariable G₂ und/oder die Gewichtungsvariable G₃ und/oder die Gewichtungsvariable G₄ verändert.

So ist also beispielsweise auch der Fall denkbar, dass zwei konkurrierende Qualitätskriterien Q₃, Q₄ die Maximierung des Arbeitsprozessparameters "Ausdrusch" und die Maximierung des Arbeitsprozessparameters "Durchsatz" sind, wobei basierend auf einer bedienerseitig vorgenommenen Änderung der Gewichtungsvariable G₂, die diesen konkurrierenden Qualitätskriterien Q₃, Q₄ zugeordnet ist, als Optimierungsvorschlag O eine Veränderung der Gewichtung der konkurrierenden Qualitätskriterien Q₁; Q₂ "Minimierung des Arbeitsprozessparameters Bruchkornanteil" und "Maximierung des Arbeitsprozessparameters Durchsatz" und/oder der Gewichtung der konkurrierenden Qualitätskriterien Q₅, Q₆ "Maximierung des Arbeitsprozessparameters Sauberkeit" und "Maximierung des Arbeitsprozessparameters Durchsatz" und/oder der Gewichtung der konkurrierenden Qualitätskriterien Q₇, Q₈ "Maximierung des Arbeitsprozessparameters Strohqualität" und "Maximierung des Arbeitsprozessparameters Durchsatz" vorgeschlagen und visualisiert wird.

Alternativ oder zusätzlich ist auch der Fall denkbar, dass zwei konkurrierende Qualitätskriterien Q₅, Q₆ die Maximierung des Arbeitsprozessparameters "Sauberkeit" und die Maximierung des Arbeitsprozessparameters "Durchsatz" sind, wobei basierend auf einer bedienerseitig vorgenommenen Änderung der Gewichtungsvariable G₃, die diesen konkurrierenden Qualitätskriterien Q₅, Q₆ zugeordnet ist, als Optimierungsvorschlag O eine Veränderung der Gewichtung der konkurrierenden Qualitätskriterien Q₁, Q₂ "Minimierung des Arbeitsprozessparameters Bruchkornanteil" und "Maximierung des Arbeitsprozessparameters Durchsatz" und/oder der Gewichtung der konkurrierenden Qualitätskriterien Q₃, Q₄ "Maximierung des Arbeitsprozessparameters Ausdrusch" und "Maximierung des Arbeitsprozessparameters Durchsatz" und/oder der Gewichtung der konkurrierenden Qualitätskriterien Q₇, Q₈ "Maximierung des Arbeitsprozessparameters Strohqualität" und "Maximierung des Arbeitsprozessparameters Durchsatz" vorgeschlagen und visualisiert wird.

Weiterhin ist auch der Fall denkbar, dass zwei konkurrierende Qualitätskriterien Q7, Q8 die Maximierung des Arbeitsprozessparameters "Strohqualität" und die Maximierung des Arbeitsprozessparameters "Durchsatz" sind, wobei basierend auf einer bedienerseitig vorgenommenen Änderung der Gewichtungsvariablen G4, die diesen konkurrierenden Qualitätskriterien Q₇, Q₈ zugeordnet ist, als Optimierungsvorschlag O eine Veränderung der Gewichtung der konkurrierenden Qualitätskriterien Q₁, Q₂ "Minimierung des Arbeitsprozessparameters Bruchkornanteil" und "Maximierung des Arbeitsprozessparameters Durchsatz" und/oder der Gewichtung der konkurrierenden Qualitätskriterien Q₃, Q₄ "Maximierung des Arbeitsprozessparameters Ausdrusch" und "Maximierung des Arbeitsprozessparameters Durchsatz" und/oder der Gewichtung der konkurrierenden Qualitätskriterien Q₅, Q₆ "Maximierung des Arbeitsprozessparameters Sauberkeit" und "Maximierung des Arbeitsprozessparameters Durchsatz" vorgeschlagen und visualisiert wird.

Der Vollständigkeit halber sei darauf hingewiesen, dass im hier beschriebenen Ausführungsbeispiel bei jedem Paar von Qualitätskriterien Q₁, Q₂; Q₃, Q₄; Q₅, Q₆, Q₇, Q₈ jeweils einer der beiden Arbeitsprozessparameter beispielhaft immer der "Durchsatz" ist. Grundsätzlich können aber auch andere zueinander konkurrierende Qualitätskriterien vorgesehen sein, deren jeweilige Gewichtungsvariable bedienerseitig und/oder systemseitig, wie zuvor beschrieben, veränderbar ist. Beispielsweise könnten als konkurrierende Qualitätskriterien hier auch die Minimierung des Arbeitsprozessparameters "Bruchkornanteil" und die Maximierung des Arbeitsprozessparameters "Ausdrusch" gegenübergestellt sein.

Basierend auf dem bedienerseitig angenommenen und/oder angepassten Optimierungsvorschlag O nimmt das Fahrerassistenzsystem 10 dann hier und vorzugsweise eine Veränderung der Gewichtung der jeweils konkurrierenden Qualitätskriterien Q₁, Q₂; Q₃, Q₄; Q₅, Q₆, Q₇, Q₈ vor, die dann schließlich in die Abarbeitungsstrategie mit eingeht.

Nach einer weiteren Lehre, der eigenständige Bedeutung zukommt, wird ein Verfahren für die Ansteuerung der vorschlagsgemäßen Arbeitsmaschine beansprucht.

Wesentlich für das vorschlagsgemäße Verfahren ist, dass das Fahrerassistenzsystem 10 das Strategiewahlverhalten des Bedieners 13 registriert, aus dem registrierten Strategiewahlverhalten ein Optimierungsziel prognostiziert und für dieses prognostizierte Optimierungsziel einen Optimierungsvorschlag O unterbreitet. Auf alle Ausführungen zu der Betriebsweise der vorschlagsgemäßen landwirtschaftlichen Arbeitsmaschine darf diesbezüglich verwiesen werden.

### Bezugszeichenliste

- 1: Schneidwerk
- 2: Dreschwerk
- 3: Abscheidevorrichtung
- 4: Reinigungsanordnung
- 5: Verteilanordnung
- 6: Dreschtrommel
- 7: Dreschkorb
- 8: Transportanordnung
- 9: Korntank
- 10: Fahrerassistenzsystem
- 11: Speicher
- 12: Rechenvorrichtung
- 13: Benutzer
- 14: Benutzerschnittstelle
- 15: Display
- 16-19: Bedienelemente
- 20: Mittelstellung
- Q₁-Q₈: Qualitätskriterien
- G₁-G₄: Gewichtungsvariablen

## Patentansprüche

1. Arbeitsmaschine, insbesondere landwirtschaftliche Arbeitsmaschine, Forstmaschine oder Baumaschine, mit mehreren Arbeitsorganen (1-5) zur Durchführung oder Unterstützung von Arbeit und mit einem Fahrerassistenzsystem (10) zur Ansteuerung der Arbeitsorgane (1-5) nach mindestens einer bedienerseitig vorgegebenen Abarbeitungsstrategie, die auf die Erfüllung mindestens eines Qualitätskriteriums (Q₁, Q₂, Q₃, Q₄, Q₅, Q₆, Q₇, Q₈) gerichtet ist, wobei das Fahrerassistenzsystem (10) einen Speicher (11) zum Hinterlegen von die mindestens eine Abarbeitungsstrategie kennzeichnenden Daten, eine Rechenvorrichtung (12) zur Verarbeitung der in dem Speicher (11) hinterlegten Daten und eine graphische Benutzerschnittstelle (14) aufweist, wobei konkurrierende Qualitätskriterien (Q₁, Q₂; Q₃, Q₄; Q₅, Q₆, Q₇, Q₈) gemäß einer Gewichtungsvariable (G₁, G₂, G₃, G₄) zueinander gewichtet in die Abarbeitungsstrategie eingehen, welche Gewichtungsvariable (G₁, G₂, G₃, G₄) über ein virtuelles Bedienelement (16-19) der graphischen Benutzerschnittstelle (14) visualisiert wird und bedienerseitig vorgegeben wird,
**dadurch gekennzeichnet,**
**dass** das Fahrerassistenzsystem (10) das Strategiewahlverhalten des Bedieners (13) registriert, aus dem registrierten Strategiewahlverhalten ein Optimierungsziel prognostiziert und für dieses prognostizierte Optimierungsziel einen Optimierungsvorschlag (O) unterbreitet, wobei das Fahrerassistenzsystem (10) basierend auf dem angenommenen und/oder angepassten Optimierungsvorschlag (O) eine Veränderung der Gewichtung der konkurrierenden Qualitätskriterien (Q₁, Q₂; Q₃, Q₄; Q₅, Q₆, Q₇, Q₈) vornimmt, die dann in die Abarbeitungsstrategie eingeht.

2. Arbeitsmaschine nach Anspruch 1, **dadurch gekennzeichnet, dass** das Strategiewahlverhalten des Bedieners (13) anhand einer bedienerseitig vorgenommenen Änderung der Gewichtungsvariable (G₁, G₂, G₃, G₄) registriert wird.

3. Arbeitsmaschine nach Anspruch 1 oder 2, **dadurch gekennzeichnet, dass** die Gewichtungsvariable (G₁, G₂, G₃, G₄) über das virtuelle Bedienelement (16-19) mittels Drag-and-Drop-Bedienung verstellbar ist und die Änderung der Gewichtungsvariable (G₁, G₂, G₃, G₄) durch ein Verschieben des virtuellen Bedienelements (16-19) bewirkt wird.

4. Arbeitsmaschine nach einem der vorhergehenden Ansprüche, **dadurch gekennzeichnet, dass** der Optimierungsvorschlag (O) auf der graphischen Benutzerschnittstelle (14) und/oder über das virtuelle Bedienelement (16-19) visualisiert wird.

5. Arbeitsmaschine nach einem der vorhergehenden Ansprüche, **dadurch gekennzeichnet, dass** der Optimierungsvorschlag (O) durch eine bedienerseitige Eingabe angenommen und/oder abgelehnt und/oder angepasst werden kann.

6. Arbeitsmaschine nach einem der vorhergehenden Ansprüche, **dadurch gekennzeichnet, dass** die bedienerseitige Eingabe eine Eingabe auf der Benutzerschnittstelle (14) und/oder über das virtuelle Bedienelement (16-19) ist.

7. Arbeitsmaschine nach einem der vorhergehenden Ansprüche, **dadurch gekennzeichnet, dass** das Fahrerassistenzsystem (10) zur Erfüllung der Qualitätskriterien (Q₁, Q₂, Q₃, Q₄, Q₅, Q₆, Q₇, Q₈) jeweils zugeordnete Steuermaßnahmen trifft und das Fahrerassistenzsystem (10) zur Erfüllung miteinander konkurrierender Qualitätskriterien (Q₁, Q₂; Q₃, Q₄; Q₅, Q₆, Q₇, Q₈) die zugeordneten Steuermaßnahmen gemäß der Gewichtungsvariable (G₁, G₂, G₃, G₄) zueinander gewichtet trifft.

8. Arbeitsmaschine nach einem der vorhergehenden Ansprüche, **dadurch gekennzeichnet, dass** paarweise konkurrierenden Qualitätskriterien (Q₁, Q₂; Q₃, Q₄; Q₅, Q₆; Q₇, Q₈)jeweils paarweise eine Gewichtungsvariable (G₁, G₂, G₃, G₄) zugeordnet ist, die jeweils über ein virtuelles Bedienelement (16-19) der graphischen Benutzerschnittstelle (14) visualisiert wird und bedienerseitig vorgegeben wird.

9. Arbeitsmaschine nach einem der vorhergehenden Ansprüche, **dadurch gekennzeichnet, dass** das virtuelle Bedienelement (16-19) eine Mittelstellung (20) aufweist, die einer Gleichgewichtung der dem Bedienelement (16-19) zugeordneten, konkurrierenden Qualitätskriterien (Q₁, Q₂; Q₃, Q₄; Q₅, Q₆, Q₇, Q₈) zueinander entspricht, und eine Verstellung des virtuellen Bedienelements (16-19) aus der Mittelstellung (20) heraus je nach Verstellrichtung eine Veränderung der Gewichtungsvariable (G₁, G₂, G₃, G₄) und damit der Gewichtung der Qualitätskriterien (Q₁, Q₂, Q₃, Q₄; Q₅, Q₆, Q₇, Q₈) zueinander bewirkt.

10. Arbeitsmaschine nach einem der vorhergehenden Ansprüche, **dadurch gekennzeichnet, dass** zwei konkurrierende Qualitätskriterien (Q₁, Q₂) die Minimierung des Arbeitsprozessparameters "Bruchkornanteil" und die Maximierung des Arbeitsprozessparameters "Durchsatz" sind, wobei basierend auf einer bedienerseitig vorgenommenen Änderung der Gewichtungsvariable (G₁), die diesen konkurrierenden Qualitätskriterien (Q₁, Q₂) zugeordnet ist, als Optimierungsvorschlag (O) eine Veränderung der Gewichtung der konkurrierenden Qualitätskriterien (Q₃, Q₄) "Maximierung des Arbeitsprozessparameters Ausdrusch" und "Maximierung des Arbeitsprozessparameters Durchsatz" und/oder der Gewichtung der konkurrierenden Qualitätskriterien (Q₅, Q₆) "Maximierung des Arbeitsprozessparameters Sauberkeit" und "Maximierung des Arbeitsprozessparameters Durchsatz" und/oder der Gewichtung der konkurrierenden Qualitätskriterien (Q₇, Q₈) "Maximierung des Arbeitsprozessparameters Strohqualität" und "Maximierung des Arbeitsprozessparameters Durchsatz" vorgeschlagen und visualisiert wird.

11. Arbeitsmaschine nach einem der vorhergehenden Ansprüche, **dadurch gekennzeichnet, dass** zwei konkurrierende Qualitätskriterien (Q₃, Q₄) die Maximierung des Arbeitsprozessparameters "Ausdrusch" und die Maximierung des Arbeitsprozessparameters "Durchsatz" sind, wobei basierend auf einer bedienerseitig vorgenommenen Änderung der Gewichtungsvariable (G₂), die diesen konkurrierenden Qualitätskriterien (Q₃, Q₄) zugeordnet ist, als Optimierungsvorschlag (O) eine Veränderung der Gewichtung der konkurrierenden Qualitätskriterien (Q₁, Q₂) "Minimierung des Arbeitsprozessparameters Bruchkornanteil" und "Maximierung des Arbeitsprozessparameters Durchsatz" und/oder der Gewichtung der konkurrierenden Qualitätskriterien (Q₅, Q₆) "Maximierung des Arbeitsprozessparameters Sauberkeit" und "Maximierung des Arbeitsprozessparameters Durchsatz" und/oder der Gewichtung der konkurrierenden Qualitätskriterien (Q₇, Q₈) "Maximierung des Arbeitsprozessparameters Strohqualität" und "Maximierung des Arbeitsprozessparameters Durchsatz" vorgeschlagen und visualisiert wird.

12. Arbeitsmaschine nach einem der vorhergehenden Ansprüche, **dadurch gekennzeichnet, dass** zwei konkurrierende Qualitätskriterien (Q₅, Q₆) die Maximierung des Arbeitsprozessparameters "Sauberkeit" und die Maximierung des Arbeitsprozessparameters "Durchsatz" sind, wobei basierend auf einer bedienerseitig vorgenommenen Änderung der Gewichtungsvariable (G₃), die diesen konkurrierenden Qualitätskriterien (Q₅, Q₆) zugeordnet ist, als Optimierungsvorschlag (O) eine Veränderung der Gewichtung der konkurrierenden Qualitätskriterien (Q₁, Q₂) "Minimierung des Arbeitsprozessparameters Bruchkornanteil" und "Maximierung des Arbeitsprozessparameters Durchsatz" und/oder der Gewichtung der konkurrierenden Qualitätskriterien (Q₃, Q₄) "Maximierung des Arbeitsprozessparameters Ausdrusch" und "Maximierung des Arbeitsprozessparameters Durchsatz" und/oder der Gewichtung der konkurrierenden Qualitätskriterien (Q₇, Q₈) "Maximierung des Arbeitsprozessparameters Strohqualität" und "Maximierung des Arbeitsprozessparameters Durchsatz" vorgeschlagen und visualisiert wird.

13. Arbeitsmaschine nach einem der vorhergehenden Ansprüche, **dadurch gekennzeichnet, dass** zwei konkurrierende Qualitätskriterien (Q₇, Q₈) die Maximierung des Arbeitsprozessparameters "Strohqualität" und die Maximierung des Arbeitsprozessparameters "Durchsatz" sind, wobei basierend auf einer bedienerseitig vorgenommenen Änderung der Gewichtungsvariable (G₄), die diesen konkurrierenden Qualitätskriterien (Q₇, Q₈) zugeordnet ist, als Optimierungsvorschlag (O) eine Veränderung der Gewichtung der konkurrierenden Qualitätskriterien (Q₁, Q₂) "Minimierung des Arbeitsprozessparameters Bruchkornanteil" und "Maximierung des Arbeitsprozessparameters Durchsatz" und/oder der Gewichtung der konkurrierenden Qualitätskriterien (Q₃, Q₄) "Maximierung des Arbeitsprozessparameters Ausdrusch" und "Maximierung des Arbeitsprozessparameters Durchsatz" und/oder der Gewichtung der konkurrierenden Qualitätskriterien (Q₅, Q₆) "Maximierung des Arbeitsprozessparameters Sauberkeit" und "Maximierung des Arbeitsprozessparameters Durchsatz" vorgeschlagen und visualisiert wird.

14. Verfahren für die Ansteuerung einer Arbeitsmaschine, insbesondere landwirtschaftlichen Arbeitsmaschine, Forstmaschine oder Baumaschine, mit mehreren Arbeitsorganen (1-5) zur Durchführung oder Unterstützung von Arbeit und mit einem Fahrerassistenzsystem (10) zur Ansteuerung der Arbeitsorgane (1-5) nach mindestens einer bedienerseitig vorgegebenen Abarbeitungsstrategie, die auf die Erfüllung mindestens eines Qualitätskriteriums (Q₁, Q₂, Q₃, Q₄, Q₅, Q₆, Q₇, Q₈) gerichtet ist, wobei das Fahrerassistenzsystem (10) einen Speicher (11) zum Hinterlegen von die mindestens eine Abarbeitungsstrategie kennzeichnenden Daten, eine Rechenvorrichtung (12) zur Verarbeitung der in dem Speicher (11) hinterlegten Daten und eine graphische Benutzerschnittstelle (14) aufweist, wobei konkurrierende Qualitätskriterien (Q₁, Q₂; Q₃, Q₄; Q₅, Q₆, Q₇, Q₈) gemäß einer Gewichtungsvariable (G₁, G₂, G₃, G₄) zueinander gewichtet in die Abarbeitungsstrategie eingehen, welche Gewichtungsvariable (G₁, G₂, G₃, G₄) über ein virtuelles Bedienelement (16-19) der graphischen Benutzerschnittstelle (14) visualisiert wird und bedienerseitig vorgegeben wird,
**dadurch gekennzeichnet,**
**dass** das Fahrerassistenzsystem (10) das Strategiewahlverhalten des Bedieners (13) registriert, aus dem registrierten Strategiewahlverhalten ein Optimierungsziel prognostiziert und für dieses prognostizierte Optimierungsziel einen Optimierungsvorschlag (O) unterbreitet, wobei das Fahrerassistenzsystem (10) basierend auf dem angenommenen und/oder angepassten Optimierungsvorschlag (O) eine Veränderung der Gewichtung der konkurrierenden Qualitätskriterien (Q₁, Q₂; Q₃, Q₄; Q₅, Q₆, Q₇, Q₈) vornimmt, die dann in die Abarbeitungsstrategie eingeht.

## Claims

1. A working machine, in particular an agricultural working machine, a forestry machine or a construction machine, comprising a plurality of working members (1-5) for carrying out or assisting work and a driver assist system (10) for controlling the working members (1-5) in accordance with at least one processing strategy which is predetermined at the greater side and which is adapted to fulfil at least one quality criterion (Q₁, Q₂, Q₃, Q₄, Q₅, Q₆, Q₇, Q₈), wherein the driver assist system has a memory (11) for storing data characterising the at least one processing strategy, a computing device (12) for processing the data stored in the memory (11) and a graphical user interface (14), wherein competing quality criteria (Q₁, Q₂, Q₃, Q₄, Q₅, Q₆, Q₇, Q₈), are incorporated into the processing strategy in weighted relationship with each other in accordance with a weighting variable (G₁, G₂, G₃, G₄), which weighting variable (G₁, G₂, G₃, G₄) is visualised by way of a virtual operating element (16-19) of the graphical user interface (14) and is predetermined at the operator side,
**characterised in that** the driver assist system (10) registers the strategy selection behaviour of the operator (13), prognosticates an optimisation target from the registered strategy selection behaviour and makes an optimisation proposal (O) for said prognosticated optimisation target, wherein the driver assist system (10) on the basis of the assumed and/or adapted optimisation proposal (O) effects a variation in the weighting of the competing quality criteria (Q₁, Q₂, Q₃, Q₄, Q₅, Q₆, Q₇, Q₈) which is then incorporated into the processing strategy.

2. A working machine according to claim 1 **characterised in that** the strategy selection behaviour of the operator (13) is registered on the basis of a change effected at the operator side in the weighting variable (G₁, G₂, G₃, G₄).

3. A working machine according to claim 1 or claim 2 **characterised in that** the weighting variable (G₁, G₂, G₃, G₄) is adjustable by way of the virtual operating element (16-19) by means of drag-and-drop operation and the change in the weight variable (G₁, G₂, G₃, G₄) is effected by a displacement of the virtual operating element (16-19).

4. A working machine according to one of the preceding claims **characterised in that** the optimisation proposal (O) is visualised on the graphical user interface (14) and/or by way of the virtual operating element (16-19).

5. A working machine according to one of the preceding claims **characterised in that** the optimisation proposal (O) can be accepted and/or rejected and/or adapted by way of an operator input.

6. A working machine according to one of the preceding claims **characterised in that** the operator input is an input on the user interface (14) and/or by way of the virtual operating element (16-19).

7. A working machine according to one of the preceding claims **characterised in that** the driver assist system (10) implements respectively associated control measures for fulfilling the quality criteria (Q₁, Q₂, Q₃, Q₄, Q₅, Q₆, Q₇, Q₈) and the driver assist system (10) to fulfil mutually competing quality criteria (Q₁, Q₂, Q₃, Q₄, Q₅, Q₆, Q₇, Q₈) implements the associated control measures in accordance with the weighting variable (G₁, G₂, G₃, G₄) relative to each other.

8. A working machine according to one of the preceding claims **characterised in that** a weighting variable (G₁, G₂, G₃, G₄) is respectively associated in pair-wise relationship with pair-wise competing quality criteria (Q₁, Q₂, Q₃, Q₄, Q₅, Q₆, Q₇, Q₈), which weighting variable is respectively visualised by way of a virtual operating element (16-19) of the graphical user interface (14) and is predetermined at the operator side.

9. A working machine according to one of the preceding claims **characterised in that** the virtual operating element (16-19) has a central position (20) corresponding to equal weighting of the competing quality criteria (Q₁, Q₂, Q₃, Q₄, Q₅, Q₆, Q₇, Q₈) associated with the operating element (16-19) relative to each other and movement of the virtual operating element (16-19) out of the central position (20) depending on the respective direction of movement causes a variation in the weighting variable (G₁, G₂, G₃, G₄) and thus the weighting of the quality criteria (Q₁, Q₂, Q₃, Q₄, Q₅, Q₆, Q₇, Q₈) relative to each other.

10. A working machine according to one of the preceding claims **characterised in that** two competing quality criteria (Q₁, Q₂) are minimisation of the working processing parameter 'broken grain proportion' and maximisation of the working process parameter 'throughput', wherein based on a operator-effected change in the weighting variable (G₁) associated with said competing quality criteria (Q₁, Q₂) the optimisation proposal (O) proposed and visualised is a variation in the weighting of the competing quality criteria (Q₃, Q₄) 'maximisation of the working process parameter threshing' and 'maximisation of the working process parameter throughput' and/or the weighting of the competing quality criteria (Q₅, Q₆) 'maximisation of the working process parameter cleanliness' and 'maximisation of the working process parameter throughput' and/or the weighting of the competing quality criteria (Q₇, Q₈) 'maximisation of the working process parameter straw quality' and 'maximisation of the working process parameter 'throughput'.

11. A working machine according to one of the preceding claims **characterised in that** two competing quality criteria (Q₃, Q₄) are maximisation of the working processing parameter 'threshing' and maximisation of the working process parameter 'throughput', wherein based on a operator-effected change in the weighting variable (G₂) associated with said competing quality criteria (Q₃, Q₄) the optimisation proposal (O) proposed and visualised is a variation in the weighting of the competing quality criteria (Q₁, Q₂) 'minimisation of the working process parameter broken grain proportion' and 'maximisation of the working process parameter throughput' and/or the weighting of the competing quality criteria (Q₅, Q₆) 'maximisation of the working process parameter cleanliness' and 'maximisation of the working process parameter throughput' and/or the weighting of the competing quality criteria (Q₇, Q₈) 'maximisation of the working process parameter straw quality' and 'maximisation of the working process parameter 'throughput'.

12. A working machine according to one of the preceding claims **characterised in that** two competing quality criteria (Q₅, Q₆) are maximisation of the working processing parameter 'cleanliness' and maximisation of the working process parameter 'throughput', wherein based on a operator-effected change in the weighting variable (G₃) associated with said competing quality criteria (Q₅, Q₆) the optimisation proposal (O) proposed and visualised is a variation in the weighting of the competing quality criteria (Q₁, Q₂) 'minimisation of the working process parameter broken grain proportion and 'maximisation of the working process parameter throughput' and/or the weighting of the competing quality criteria (Q₃, Q₄) 'maximisation of the working process parameter threshing' and 'maximisation of the working process parameter throughput' and/or the weighting of the competing quality criteria (Q₇, Q₈) 'maximisation of the working process parameter straw quality' and 'maximisation of the working process parameter 'throughput'.

13. A working machine according to one of the preceding claims **characterised in that** two competing quality criteria (Q₇, Q₈) are maximisation of the working processing parameter straw quality' and maximisation of the working process parameter 'throughput', wherein based on a operator-effected change in the weighting variable (G₄) associated with said competing quality criteria (7₁, Q₈) the optimisation proposal (O) proposed and visualised is a variation in the weighting of the competing quality criteria (Q₁, Q₂) 'minimisation of the working process parameter broken grain proportion' and 'maximisation of the working process parameter throughput' and/or the weighting of the competing quality criteria (Q₃, Q₄) 'maximisation of the working process parameter threshing' and 'maximisation of the working process parameter throughput' and/or the weighting of the competing quality criteria (Q₅, Q₆) 'maximisation of the working process parameter cleanliness' and 'maximisation of the working process parameter 'throughput'.

14. A method of controlling a working machine, in particular an agricultural working machine, a forestry machine or a construction machine, comprising a plurality of working members (1-5) for carrying out or assisting work and a driver assist system (10) for controlling the working members (1-5) in accordance with at least one processing strategy which is predetermined at the operator side and which is adapted to fulfil at least one quality criterion (Q₁, Q₂, Q₃, Q₄, Q₅, Q₆, Q₇, Q₈), wherein the driver assist system (10) has a memory (11) for storing data characterising the at least one processing strategy, a computing device (12) for processing the data stored in the memory (11) and a graphical user interface (14), wherein competing quality criteria (Q₁, Q₂, Q₃, Q₄, Q₅, Q₆, Q₇, Q₈), are incorporated into the processing strategy in weighted relationship with each other in accordance with a weighting variable (G₁, G₂, G₃, G₄), which weighting variable (G₁, G₂, G₃, G₄) is visualised by way of a virtual operating element (16-19) of the graphical user interface (14) and is predetermined at the operator side,
**characterised in that** the driver assist system (10) registers the strategy selection behaviour of the operator (13), prognosticates an optimisation target from the registered strategy selection behaviour and makes an optimisation proposal (O) for said prognosticated optimisation target, wherein the driver assist system (10) on the basis of the assumed and/or adapted optimisation proposal (O) effects a variation in the weighting of the competing quality criteria (Q₁, Q₂, Q₃, Q₄, Q₅, Q₆, Q₇, Q₈) which is then incorporated into the processing strategy.

## Revendications

1. Machine de travail, en particulier machine de travail agricole, machine forestière ou machine de chantier, comprenant plusieurs organes de travail (1-5) pour réaliser ou assister un travail et comprenant un système d'assistance à la conduite (10) pour agir sur les organes de travail (1-5) selon au moins une stratégie d'exécution qui est prescrite côté utilisateur et qui vise à remplir au moins un critère de qualité (Q₁, Q₂, Q₃, Q₄, Q₅, Q₆, Q₇, Q₈), le système d'assistance à la conduite (10) comportant une mémoire (11) pour enregistrer des données caractérisant la au moins une stratégie d'exécution, un dispositif de calcul (12) pour enregistrer les données mémorisées dans la mémoire (11) et une interface utilisateur graphique (14), des critères de qualité concurrents (Q₁, Q₂ ; Q₃, Q₄ ; Q₅, Q₆ ; Q₇, Q₈) entrant dans la stratégie d'exécution en étant pondérés les uns par rapport aux autres selon une variable de pondération (G₁, G₂, G₃, G₄), ladite variable de pondération (G₁, G₂, G₃, G₄) étant visualisée par l'intermédiaire d'un élément d'utilisation virtuel (16-19) de l'interface utilisateur graphique (14) et prescrite côté utilisateur, **caractérisée en ce que** le système d'assistance à la conduite (10) enregistre le comportement de sélection stratégique de l'utilisateur (13), pronostique un objectif d'optimisation à partir du comportement de sélection stratégique enregistré et soumet une proposition d'optimisation (O) pour cet objectif d'optimisation pronostiqué, le système d'assistance à la conduite (10) effectuant, sur la base de la proposition d'optimisation acceptée et/ou adaptée (O), une modification de la pondération des critères de qualité concurrents (Q₁, Q₂ ; Q₃, Q₄ ; Q₅, Q₆ ; Q₇, Q₈), laquelle entre ensuite dans la stratégie d'exécution.

2. Machine de travail selon la revendication 1, **caractérisée en ce que** le comportement de sélection stratégique de l'utilisateur (13) est enregistré à l'aide d'une modification, effectuée côté utilisateur, de la variable de pondération (G₁, G₂, G₃, G₄).

3. Machine de travail selon la revendication 1 ou 2, **caractérisée en ce que** la variable de pondération (G₁, G₂, G₃, G₄) est réglable par l'intermédiaire de l'élément d'utilisation virtuel (16-19) au moyen d'une fonction glisser-déposer et la modification de la variable de pondération (G₁, G₂, G₃, G₄) est provoquée par un déplacement de l'élément d'utilisation virtuel (16-19) .

4. Machine de travail selon une des revendications précédentes, **caractérisée en ce que** la proposition d'optimisation (O) est visualisée sur l'interface utilisateur graphique (14) et/ou par l'intermédiaire de l'élément d'utilisation virtuel (16-19).

5. Machine de travail selon une des revendications précédentes, **caractérisée en ce que** la proposition d'optimisation (O) peut être acceptée et/ou refusée et/ou adaptée par l'intermédiaire d'une saisie côté utilisateur.

6. Machine de travail selon une des revendications précédentes, **caractérisée en ce que** la saisie côté utilisateur est une saisie sur l'interface utilisateur (14) et/ou par l'intermédiaire de l'élément d'utilisation virtuel (16, 19).

7. Machine de travail selon une des revendications précédentes, **caractérisée en ce que**, pour remplir les critères de qualité (Q₁, Q₂, Q₃, Q₄, Q₅, Q₆, Q₇, Q₈), le système d'assistance à la conduite (10) prend des mesures de commande respectivement associées et, pour remplir des critères de qualité concurrents entre eux (Q₁, Q₂ ; Q₃, Q₄ ; Q₅, Q₆ ; Q₇, Q₈), le système d'assistance à la conduite (10) prend les mesures de commande associées en les pondérant les unes par rapport aux autres selon la variable de pondération (G₁, G₂, G₃, G₄).

8. Machine de travail selon une des revendications précédentes, **caractérisée en ce qu'**à des critères de qualité concurrents par paires (Q₁, Q₂ ; Q₃, Q₄ ; Q₅, Q₆ ; Q₇, Q₈) est associée respectivement par paires une variable de pondération (G₁, G₂, G₃, G₄) qui est visualisée respectivement par l'intermédiaire d'un élément d'utilisation virtuel (16-19) de l'interface utilisateur graphique (14) et est prescrite côté utilisateur.

9. Machine de travail selon une des revendications précédentes, **caractérisée en ce que** l'élément d'utilisation virtuel (16-19) comporte une position médiane (20) qui correspond à un équilibrage entre eux des critères de qualité concurrents (Q₁, Q₂ ; Q₃, Q₄ ; Q₅, Q₆ ; Q₇, Q₈) associés à l'élément d'utilisation (16-19), et un déplacement de l'élément d'utilisation virtuel (16-19) par rapport à la position médiane (20) provoque, selon le sens de déplacement, une modification de la variable de pondération (G₁, G₂, G₃, G₄) et donc la pondération des critères de qualité (Q₁, Q₂ ; Q₃, Q₄ ; Q₅, Q₆ ; Q₇, Q₈) les uns par rapport aux autres.

10. Machine de travail selon une des revendications précédentes, **caractérisée en ce que** deux critères de qualité concurrents (Q₁, Q₂) sont la minimalisation du paramètre de processus de travail « proportion de grains cassés » et la maximalisation du paramètre de processus de travail « débit », sur la base d'une modification de la variable de pondération (G₁) effectuée côté utilisateur et associée à ces critères de qualité concurrents (Q₁, Q₂) étant proposée et visualisée comme proposition d'optimisation (O) une modification de la pondération des critères de qualité concurrents (Q₃, Q₄) « maximalisation du paramètre de processus de travail battage » et « maximalisation du paramètre de processus de travail débit » et/ou de la pondération des critères de qualité concurrents (Q₅, Q₆) « maximalisation du paramètre de processus de travail propreté » et « maximalisation du paramètre de processus de travail débit » et/ou de la pondération des critères de qualité concurrents (Q₇, Q₈) « maximalisation du paramètre de processus de travail qualité de paille » et « maximalisation du paramètre de processus de travail débit ».

11. Machine de travail selon une des revendications précédentes, **caractérisée en ce que** deux critères de qualité concurrents (Q₃, Q₄) sont la maximalisation du paramètre de processus de travail « battage » et la maximalisation du paramètre de processus de travail « débit », sur la base d'une modification de la variable de pondération (G₂) effectuée côté utilisateur et associée à ces critères de qualité concurrents (Q₃, Q₄) étant proposée et visualisée comme proposition d'optimisation (O) une modification de la pondération des critères de qualité concurrents (Q₁, Q₂) « minimalisation du paramètre de processus de travail proportion de grains cassés » et « maximalisation du paramètre de processus de travail débit » et/ou de la pondération des critères de qualité concurrents (Q₅, Q₆) « maximalisation du paramètre de processus de travail propreté » et « maximalisation du paramètre de processus de travail débit » et/ou de la pondération des critères de qualité concurrents (Q₇, Q₈) « maximalisation du paramètre de processus de travail qualité de paille » et « maximalisation du paramètre de processus de travail débit ».

12. Machine de travail selon une des revendications précédentes, **caractérisée en ce que** deux critères de qualité concurrents (Q₅, Q₆) sont la maximalisation du paramètre de processus de travail « propreté » et la maximalisation du paramètre de processus de travail « débit », sur la base d'une modification de la variable de pondération (G₃) effectuée côté utilisateur et associée à ces critères de qualité concurrents (Q₅, Q₆) étant proposée et visualisée comme proposition d'optimisation (O) une modification de la pondération des critères de qualité concurrents (Q₁, Q₂) « minimalisation du paramètre de processus de travail proportion de grains cassés » et « maximalisation du paramètre de processus de travail débit » et/ou de la pondération des critères de qualité concurrents (Q₃, Q₄) « maximalisation du paramètre de processus de travail battage » et « maximalisation du paramètre de processus de travail débit » et/ou de la pondération des critères de qualité concurrents (Q₇, Q₈) « maximalisation du paramètre de processus de travail qualité de paille » et « maximalisation du paramètre de processus de travail débit ».

13. Machine de travail selon une des revendications précédentes, **caractérisée en ce que** deux critères de qualité concurrents (Q₇, Q₈) sont la maximalisation du paramètre de processus de travail « qualité de paille » et la maximalisation du paramètre de processus de travail « débit », sur la base d'une modification de la variable de pondération (G₄) effectuée côté utilisateur et associée à ces critères de qualité concurrents (Q₇, Q₈) étant proposée et visualisée comme proposition d'optimisation (O) une modification de la pondération des critères de qualité concurrents (Q₁, Q₂) « minimalisation du paramètre de processus de travail proportion de grains cassés » et « maximalisation du paramètre de processus de travail débit » et/ou de la pondération des critères de qualité concurrents (Q₃, Q₄) « maximalisation du paramètre de processus de travail battage » et « maximalisation du paramètre de processus de travail débit » et/ou de la pondération des critères de qualité concurrents (Q₅, Q₆) « maximalisation du paramètre de processus de travail propreté » et « maximalisation du paramètre de processus de travail débit ».

14. Procédé d'action sur une machine de travail, en particulier une machine de travail agricole, machine forestière ou machine de chantier, comprenant plusieurs organes de travail (1-5) pour réaliser ou assister un travail et comprenant un système d'assistance à la conduite (10) pour agir sur les organes de travail (1-5) selon au moins une stratégie d'exécution qui est prescrite côté utilisateur et qui vise à remplir au moins un critère de qualité (Q₁, Q₂, Q₃, Q₄, Q₅, Q₆, Q₇, Q₈), le système d'assistance à la conduite (10) comportant une mémoire (11) pour enregistrer des données caractérisant la au moins une stratégie d'exécution, un dispositif de calcul (12) pour enregistrer les données mémorisées dans la mémoire (11) et une interface utilisateur graphique (14), des critères de qualité concurrents (Q₁, Q₂ ; Q₃, Q₄ ; Q₅, Q₆ ; Q₇, Q₈) entrant dans la stratégie d'exécution en étant pondérés les uns par rapport aux autres selon une variable de pondération (G₁, G₂, G₃, G₄), ladite variable de pondération (G₁, G₂, G₃, G₄) étant visualisée par l'intermédiaire d'un élément d'utilisation virtuel (16-19) de l'interface utilisateur graphique (14) et prescrite côté utilisateur, **caractérisé en ce que** le système d'assistance à la conduite (10) enregistre le comportement de sélection stratégique de l'utilisateur (13), pronostique un objectif d'optimisation à partir du comportement de sélection stratégique enregistré et soumet une proposition d'optimisation (O) pour cet objectif d'optimisation pronostiqué, le système d'assistance à la conduite (10) effectuant, sur la base de la proposition d'optimisation acceptée et/ou adaptée (O), une modification de la pondération des critères de qualité concurrents (Q₁, Q₂ ; Q₃, Q₄ ; Q₅, Q₆ ; Q₇, Q₈), laquelle entre ensuite dans la stratégie d'exécution.
